# EUROPEAN PATENT APPLICATION

(11) **EP 1 350 426 A1**
(43) Date of publication of application: **08.10.2003**
(21) Application number: 01997216.5
(22) Date of filing: 27.11.2001
(51) Int. Cl.: A01G 1/00

(54) **FIXED MOSS PLANT PRODUCT**

(30) Priority: 27.11.2000 JP 2000359147; 12.03.2001 JP 2001068521; 29.06.2001 JP 2001198104; 29.10.2001 JP 2001331236
(71) Applicant: Shimura, Mitsuharu, Shinjuku-ku, Tokyo 169-0075 (JP)
(72) Inventor: SHIMURA, Mitsuharu, Shinjuku-ku, Tokyo 169-0075 (JP); TAKEDA, Minoru, Minato-ku, Tokyo 105-0014 (JP)
(74) Representative: Bohmann, Armin K., Dr.
(86) International application number: JP0110313
(87) International publication number: WO02041688

(57) **Abstract**

A fixed moss plant material including a composition which contains ground paper and/or a paper precursor, and fine soil matter and a composition which contains ground paper and/or a paper precursor, fine soil matter, and a moss plant, wherein the latter composition is fixedly laid atop an upper surface of the former composition. Making use of a moss plant, the present invention enables provision of a material returnable to nature which can be produced at lower cost.

## Description

### TECHNICAL FIELD

The present invention is an invention in a technical field relating to material using plant materials.

### BACKGROUND ART

At present, materials of various kinds and for various applications are provided. Most are those, such as plastics and metals, obtained through industrial processes.

These industrially-produced materials are essential for maintenance and development of modern advanced technology. However, development and production of such materials has undoubtedly raised new problems, such as increase in carbon dioxide content of the air, disruption of the ozone layer, and endocrine disrupters, thus affecting the global environment to no small extent.

Under the above-described circumstances, there have been provided materials produced by processes that are of the "return to nature" type to the extent possible, without employment of industrial processes which has heretofore been necessary, such as pavement materials produced through solidification of rice hulls or shells.

However, such attempts have just started. Such "materials returnable to nature" have not yet been developed to such a level as to be usable substitutes for conventional industrial products.

In view of the foregoing, the present inventors had previously conducted research in an attempt to provide means capable of realizing such a "material returnable to nature." In the course of the research, the vigorous rooting power of plants attracted the inventors' attention, and on the basis of such power, the present inventors found that use of the "root spreading" phenomenon as the primary means in fixation of fine matter which has conventionally been difficult to fix enables provision of an environmentally friendly "material returnable to nature, or fine-matter-fixed material (hereinafter may also be called a root-spread, fixed material) in which fine matter is fixed in a definite shape by use of root spreading of plants," not by an industrial production process but by an agricultural production process (WO00/25570).

The root-spread, fixed material has excellent characteristics as a material returnable to nature. However, in some conceivable cases, provision of a less expensive material will be demanded.

Thus, an object of the present invention is to provide a material returnable to nature which can be produced at lower cost than a root-spread, fixed material and can effectively improve the environment.

### DISCLOSURE OF THE INVENTION

The present inventors have carried out extensive studies in order to achieve the above object and have found that a composition which contains ground paper and/or a paper precursor material and fine soil matter can be used as a basic material for providing a material returnable to nature that can achieve the above object.

To achieve the above object, the present invention provides a fixed moss plant material (hereinafter may be called the present fixed material) wherein a composition (hereinafter may be called an upper-surface composition) which contains ground paper and/or a paper precursor (hereinafter may be called ground paper or the like), fine soil matter, and a moss plant is fixedly laid on the upper surface of a composition (hereinafter may be called a foundation composition) which contains ground paper or the like, and fine soil matter (notably, the "upper surface" of the present fixed material refers to the front surface, not the surface which faces a surface to be overlaid with the present fixed material).

The present inventors have defined requirements for the foundation composition and upper-surface composition as "to solidify to a definite shape after being applied and to have no adverse effect on growth of a moss plant." For example, cement or mortar solidifies to a definite shape after being installed, but impairs growth of a moss plant or the like because of strong alkalinity, and thus is excluded from application to the compositions. A synthetic resin or the like is also excluded for the following reason: since a synthetic resin or the like is in an unsolid condition only at high temperature, a synthetic resin or the like in an unsolid condition cannot be brought in contact with a moss plant. Usually, an unsolid condition shifts to a solid condition through evaporation of a solvent. However, since an organic solvent has adverse effect on growth of a moss plant, material which is maintained in an unsolid condition by means of an organic solvent is inappropriate.

Preferably, material which satisfies the above-mentioned requirements employs water as a solvent for maintaining the same in an unsolid, plastic condition.

Examples of material capable of satisfying the above-mentioned requirements include clay and ground paper. Clay exhibits heavy unit weight and tends to become very fragile when in a solid condition. Ground paper exhibits light unit weight, but tends to become fragile when in a solid condition. Also, ground paper contains few substances useful for growth of plants, and thus life forms are unlikely to settle thereon after the same is laid on site.

An example of a preferred material satisfying the above-mentioned requirements is a composition which contains ground paper and/or a paper precursor and fine soil matter.

Ground paper is literally paper that is ground. No particular limitation is imposed on paper to be ground. Examples of applicable paper include newspaper, medical paper, magazines, newspaper inserts, and copying paper, as well as kenaf paper (paper produced from vegetable fibers of kenaf according to an ordinary paper making process). The term "ground" refers to a condition in which material paper is partially or entirely in such a fine condition as to be fibrous. No particular limitation is imposed on grinding means. In preparation of a precursory composition, which will be described hereinbelow, paper can be ground in water by means of, for example, shearing with a shearing blade, filing with a file, or crumpling with hands, thereby obtaining desired ground paper.

A paper precursor is water-containing vegetable fibers refined from a pulp and serving as a direct material for paper.

Fine soil matter refers to "fine matter resembling soil." Examples of fine soil matter include soil (culture soil or potting compost, or the like), gravel, sand, pottery powder, glass powder, diatomaceous earth, ashes, lightweight aggregate, clay, peat moss, and perlite. These substances may be used singly or in combination of two or more species as fine soil matter, and according to needs, the species and formulation may be appropriately determined. Surplus soil which arises in the process of producing a root-spread, fixed material can also be used as fine soil matter. Linking the production of a root-spread, fixed material and that of the present fixed material can construct a recycling system for producing a material returnable to nature.

The foundation composition and upper-surface composition can contain, as needed, fine matter other than fine soil matter so long as their original purpose is not impaired. Specifically, for example, these compositions can contain vegetable fibers (e.g., roots used to form a root-spread surface, and sheared plant roots), straw, ground kitchen garbage, charcoal pieces, ore, or plant seed. Particularly, vegetable fibers, when contained, are useful for reinforcing these compositions. More particularly, roots used to form a root-spread surface, or sheared plant roots remain animate and grow in a product for a while even after being cut off from plant seed (typically, roots grow in the final drying process of production), thereby enhancing the strength of the product. Therefore, when plant roots are to be contained in the foundation composition and upper-surface composition, preferably plant roots are used immediately after being cut off from seed, to the greatest possible extent. No particular limitation is imposed on plants which provide roots for such use. However, gramineous plants such as rice plants, barley, and corn are practical sources of such roots. No particular limitation is imposed on plant roots content. Generally, the foundation composition or upper-surface composition contains plant roots in an amount of about 1% to 20% by wet mass.

Preferably, the foundation composition and upper-surface composition contain clay as fine soil matter, since strength and plasticity thereof can be enhanced [the coexistence of clay and ground paper or the like can synergistically enhance strength and plasticity (this will be described hereinlater)]. Notably, in the present invention, clay refers to fine soil matter having an average particle size of 0.074 mm or less. Generally, clay refers to fine soil matter called silt, clay, or colloid.

The foundation composition and upper-surface composition can contain, for example, a binding-strength modifier such as a binder or thickening agent, in addition to ground paper or the like and fine soil matter. However, without addition of such a binding-strength modifier (particularly, a chemically synthetic agent), the present fixed material can maintain its original shape over long-term use and thus is harmless to the earth's environment (the present fixed material does not involve a problem of outflow of a chemically synthetic agent which could result from, for example, rainfall and have an adverse effect on the environment). Preferably, to the greatest possible extent, such a binding-strength modifier is not contained. Thus, preferably, the foundation composition and upper-surface composition (its components other than a moss plant) do not contain a binding-strength modifier [as used herein, the term "substantially" implies that trace components contained in paper (e.g., printing ink of printed paper such as newspaper) and water can be contained].

The foundation composition and upper-surface composition are formed from respective precursory compositions. Specifically, first, precursory compositions which contain ground paper or the like, fine soil matter, and water (a precursory composition of the upper-surface composition further contains a moss plant) are prepared for use in production of the present fixed material. The respective precursory compositions of the foundation composition and upper-surface composition are disposed in layers within a form of predetermined shape, and the resultant laminate is compressed and shaped, thereby yielding the present fixed material in a wet condition. The wet, present fixed material is dried, thereby completing production of the present fixed material. Notably, when the precursory compositions of the foundation and upper-surface compositions are to be disposed in layers, a binding composition may be interposed therebetween. A typical binding composition can be a kneaded composition obtained from kneading water and the same components as those of the foundation composition, or kneading water and at least the basic components of the foundation composition, or fine soil matter and ground paper. In this case, water is added in an amount greater (two to five times) than that used in preparing an ordinary precursory composition. The binding composition ensures binding between the foundation composition and the upper-surface composition.

Since both of the foundation composition and upper-surface composition are homogeneous compositions which contain ground paper or the like and fine soil matter, a mere step of compressing the foundation composition and upper-surface composition disposed in layers causes their mutually contacting surfaces to integrate, whereby the foundation composition and upper-surface composition are held in the form of laminate without need to positively use an adhesive or the like. In order to perform this integration through mere arrangement in layers and subsequent compression, preferably both of the compositions use the same ground paper or the like and fine soil matter to the greatest possible extent.

No particular limitation is imposed on the ratio between ground paper or the like and fine soil matter in the foundation composition and upper-surface composition. Preferably, the mass ratio between ground paper or the like and fine soil matter is about 1:2 to 1:4. When the amount by percent of ground paper or the like becomes excessively high, the foundation composition itself and upper-surface composition itself become fragile. As for coloring, the color of paper stands out, and thus in some cases color design may become inappropriate. When the percentage of fine soil matter becomes excessively high, the binding strength between the foundation composition and the upper-surface composition drops, and thus the resultant laminate encounters difficulty in stably maintaining its shape even after being dried. Furthermore, the cost per volume of both compositions tends to increase.

As described above, preferably, clay is contained as fine soil matter in the foundation composition and upper-surface composition. No particular limitation is imposed on clay content. Clay can account for all fine soil matter contained in the compositions. Generally, the preferred mass ratio between clay and fine soil matter other than clay is about 1:10 to 1:1.

No particular limitation is imposed on the ratio of water to ground paper or the like and fine soil matter in the precursory compositions of the foundation composition and upper-surface composition. Water content can be freely selected. Generally, it is preferable that 100% by mass precursory compositions of the foundation composition and upper-surface composition contain water in an approximate amount of 1% to 30% by mass and 3% to 25% by mass, respectively. When ground paper is to be used, excessively low water content raises difficulty in grinding paper and in sufficiently kneading ground paper and fine soil matter. Excessively high water content excessively increases the weight of the precursory compositions; as a result, work load in preparing both compositions becomes excessive, and water resource is wasted. However, when the foundation composition and upper-surface composition (particularly, the upper-surface composition) are to be formed thin, increasing water content may be favorable in some cases. When a paper precursor is to be used in place of ground paper, the paper precursor which contains water preferably exhibits the above-mentioned water content.

Use of the upper-surface composition containing a moss plant allows the production of the present fixed material, wherein a moss plant can regenerate, without employment of an additional step of adding a moss plant in producing the present fixed material. However, the present fixed material must be formed such that a moss plant contained in the upper-surface composition is exposed, in order to grow the moss plant. Means for exposing a moss plant is to employ high moss plant content of the upper-surface composition. Specifically, the moss plant content of the upper-surface composition is rendered about two to 15 times (by mass) the content of the components other than the mass plant. When the moss plant content is less than two times the content of other components of the upper-surface composition, components (paper fibers and fine soil matter) other than the moss plant cover the upper surface of the present composition, thereby hindering the growth of the moss plant. When the moss plant content is in excess of 15 times the content of other components of the upper-surface composition, the force of fixing the moss plant in the upper-surface composition tends to become too weak.

Another means for exposing a moss plant is described below. While the moss plant content of the upper-surface composition is less than two times (by mass), preferably 0.1 to one time, the content of other components, the present fixed material which has undergone shaping is subjected to exposure of the moss plant from its upper surface by use of certain means for exposing a moss plant. Examples of the means for exposing a moss plant include (1) the surface of the present fixed material is shaved thin by use of a motor-driven tool with a file or a like tool; (2) before water is lost from the precursory composition of the upper-surface composition which has undergone shaping, the surface of the upper-surface composition which has undergone shaping is brought into contact with a water flow; and (3) a precursory composition of the foundation composition is placed on a moss plant which is arranged colonially (in a shape resembling a colony of wild moss) in a standing condition and is to be exposed, and then the covering composition is caused to move toward a lower portion of the colonially standing moss plant such that an upper portion of the moss plant is exposed in a standing condition. Notably, means (2) and (3) are preferred.

Exposing means (2) and (3) are highly advantageous means, since a moss plant can be efficiently exposed, and in contrast to the shaving process, no dust is generated during exposing work.

Exposing process (2), which uses a water flow, is rendered feasible by the feature of the present fixed material that a moss plant is contained. Specifically, when exposing means (2) is to be performed, the precursory composition to be brought into contact with a water flow contains water and is in an unsolid condition; therefore, in a usual case the composition will break as a result of contact with a water flow. However, when the surface of the composition which has undergone shaping is brought into contact with a water flow, the moss plant present in the vicinity of the surface traps the water flow, thereby preventing the composition from breaking. Only fine soil matter and ground paper or the like contained in a surface portion of the precursory composition are carried away as a result of contact with the water flow, whereby the moss plant can be easily exposed in a desired condition. Notably, the intensity of this water flow may be to such a degree as to be of a water flow which is discharged from a nozzle attached to a hose connected to a domestic water supply line used in daily life in Japan (when water pressure drops extremely, for example, in the event of restriction on water supply, the water pressure may be insufficient).

Exposing process (3) can most clearly expose moss plant bodies from the surface of the present fixed body. In contrast to exposing processes (1) and (2), which can partially expose lateral portions of moss plant bodies, exposing process (3) can fully expose, from the surface of the present fixed material, near-apical portions of moss plant bodies arranged colonially in a standing condition (a "standing condition" means that apical portions of moss plant bodies face upward, but do not necessarily stand upright, and includes a condition in which apical portions of moss plant bodies face obliquely upward). The present fixed material wherein moss plant bodies are exposed by exposing process (3) can exhibit vivid moss green upon completion of production, as does a moss plant which begins to bear regeneration buds after being nurtured in the present fixed material which has undergone any other exposing process. Notably, exposing process (3) imposes no particular limitation on means for moving a precursory composition of the foundation composition toward a lower portion of a moss plant arranged in a colonially standing condition. A water flow or wind force may be used. However, a water flow is preferred. Similar to the case of exposing process (2), the intensity of this water flow may be to such a degree as to be of a water flow which is discharged from a nozzle attached to a hose connected to an ordinary, domestic water supply line.

A product whose production employs exposing process (1) or (2) and a product whose production employs exposing process (3) differ in the condition of a moss plant observed immediately after production and thus differ in appearance. Thus, a product can be highly diversified, for example, in the following manner. The same present fixed material bears a portion which has undergone exposing process (3) for exposing near-apical portions of moss plant bodies, and a portion which has undergone exposing process (1) or (2) for partially exposing lateral portions of moss plant bodies.

The present fixed material whose production has employed any of the above-described means for exposing a moss plant ((1), (2), and (3)) or like means is formed such that a moss plant (in the case of (1) or (2)), or an upper-surface-composition portion of the present fixed material or a near-lower portion of a standing moss plant (in the case of (3)) is firmly fixed by means of paper fibers, fine soil matter, and the like. Thus, for example, even when the present fixed material is laid on an inclined surface, exfoliation of a moss plant upon exposure to rain, wind, or the like can be reduced.

When the thickness of the present fixed material is to be considerably reduced (thickness of substrate: about 5 mm), the present fixed material can be formed entirely from the upper-surface composition whose moss plant content is less than two times (preferably, 0.1 to one time) the content of other components. Even in production of the present fixed material in this form, employment of means for exposing a moss plant similar to the above-described means (e.g., (1) or (2)) enables exposure of a moss plant from the upper surface of this thin, present fixed material.

The present fixed material can be configured such that the concave-convex structure is provided on the upper surface thereof and such that the concave structure and/or the convex structure is formed from the upper-surface composition.

Specifically, geometric patterns, character patterns, or the like can be formed on the upper surface of the present fixed material by means of the concave-convex structure, and a moss plant can be selectively arranged on the concave structure and/or the convex structure.

Since a moss plant can be selectively arranged as mentioned above, the quantity of a moss plant used in the present fixed material can be reduced. Furthermore, since various designs can be provided on the present fixed material, the present fixed material allows various attempts in relation to design.

That is, the present invention provides the present fixed material wherein the concave-convex structure (hereinafter may be called the present concave-convex structure) is provided on the upper surface thereof, and the concave structure and/or the convex structure is formed from a composition which contains ground paper or the like, fine soil matter, and a moss plant.

In the present fixed material, the present concave-convex structure can typically assume modes (1) and (2) described below (as a matter of course, modes (1) and (2) can be combined, and the concave structure and/or the convex structure can be partially and selectively formed from the upper-surface composition) .
(1) A convex structure is formed on the upper surface of the present fixed material, and the convex structure or a non-convex structure in relation to the convex structure is formed from the upper-surface composition.
(2) A concave structure is formed on the upper surface of the present fixed material, and the concave structure or a non-concave structure in relation to the concave structure is formed from the upper-surface composition.

A process for producing the present fixed material having a concave-convex structure will be described hereinlater in the section "BEST MODE FOR CARRYING OUT THE INVENTION."

Furthermore, a moss plant can be directly arranged in a fixed condition on the upper surface of the present fixed material without use of the upper-surface composition.

In this case, the present fixed material can be produced in the following manner. A moss plant is arranged at positions of interest on the upper surface of the wet foundation composition (e.g., a plate member wherein through-holes in a predetermined shape are formed so as to receive a moss plant is placed on the upper surface of the wet foundation composition disposed in a form, and the moss plant is placed in the through-holes to thereby be arranged at the predetermined positions), which is disposed in a form or the like so as to assume a predetermined shape (e.g., a shape permitting to serve as a substrate). The thus-arranged moss plant is pressed into the foundation composition (e.g., by use of a plate member which has press protrusions corresponding to the through-holes of the above-mentioned plate member). The thus-prepared article is allowed to dry, thereby yielding this mode of the present fixed material. In the present fixed material wherein a moss plant is to be directly planted, the upper-surface composition in a ground form can be used in place of the moss plant. Specifically, a composition (solidified) which contains ground paper or the like, fine soil matter, and a moss plant is ground (by use of, for example, a grinder capable of grinding an object with a rotating blade), thereby yielding ground matter of the upper-surface composition. The thus-obtained ground matter can be used in a manner similar to that described above for using a moss plant. Preferably, the upper-surface composition is not ground into particulate, but is ground into cotton-like fluffiness by use of appropriate grinding means such as an appropriate rotating blade. Cotton-like fluffy ground matter, particularly when water is added thereto, readily adheres to an object and is thus preferred.

When this ground matter which contains a moss plant is spread over a area that is a target of environmental improvement through growth of a moss plant, for example, a land which is covered with lava as a result of volcanic eruption, roof, and semidry concrete surface (preferably, a concrete surface has fine pits and projections formed thereon), the establishment of a moss plant in the area is accelerated, thereby accelerating environmental improvement through growth of the moss plant. Also, when a moss plant is to be grown in a field, spreading this ground matter over the field suppresses wind-induced loss as compared with the case of spreading a mere moss plant in the field.

Particularly, lightly watering ground matter which is spread on an object can easily increase the degree of establishment of a moss plant on the object.

Also, the present fixed material can be formed such that a groove structure is provided on the upper surface thereof and such that the groove structure is fixedly filled with a moss plant or the upper-surface composition.

Conceivably, a pattern to be provided on the upper surface of this mode of the present fixed material (hereinafter may be called the grooved, present fixed material) is of fine lines. Therefore, this mode is particularly preferred when applied to the case where a pattern to be formed on the surface of the present fixed material is designed to involve fine lines.

The grooved, present fixed material is produced in the following manner. Grooves are formed, by a known method, on the upper surface of the wet foundation composition, which is disposed in a form or the like so as to assume a predetermined shape (e.g., a shape permitting service as a substrate). A moss plant or the upper-surface composition is pressed into the grooves. Next, the grooves are pressed from above, whereby upper portions of the grooves are narrowed to thereby fix the filling moss plant or upper-surface composition within the grooves. Notably, no particular limitation is imposed on the cross-sectional shape of the groove. However, in order to facilitate the placement of a moss plant or upper-surface composition in grooves at the time of grooving, a shape resembling the letter U or the letter V is preferred. As mentioned above, the width of an upper portion of a groove can be narrowed through application of pressing force from above, thereby preventing the moss plant or upper-surface composition from coming off the grooves.

The thus-produced, grooved, present fixed material in a wet condition is allowed to dry, thereby completing production of the grooved, present fixed material (a fixed moss plant material wherein a groove structure is provided on the upper surface of the foundation composition, and a moss plant or the upper-surface composition is fixedly filled in the groove structure).

A native moss plant can be used as is in the present fixed material. For example, the usable condition of a moss plant ranges from the initial stage of growth, in which the overall length is 2 mm to 3 mm, to the mature stage of growth, in which a moss plant has grown to a certain plant body length; specifically, 2 cm to 3 cm or longer (no upper limit is imposed on the plant body length; a moss plant which has grown to its maximum plant body length is usable). An applicable moss plant may be a moss plant obtained by a domestication method or a moss plant ("cultivated moss") obtained by a so-called cultivation method (refer to, for example, "Plant Biotechnology II," Tokyo Kagaku Dojin: "Modern Chemistry," Extra Number 20, page 39, "Cultivation of Bryophytes" authored by Ono). Usually, a moss plant obtained by a domestication method is preferred.

A moss plant to be used can be domesticated by a relevant known method.

Specifically, sand or the like is laid on, for example, a pallet of good drainage. Then, a moss plant of a desired kind is planted on the sand or the like and is nurtured under appropriate temperature and sunshine conditions, to thereby be raised.

A moss plant raised on a pallet or a native moss plant can be transplanted on the ground and nurtured so as to raise the moss plant on a large scale.

In this case, preferably, sand or like soil is cleaned off a moss plant, and then the moss plant is planted on the ground in an efficiently scattered condition. A moss plant can be efficiently cleaned and scattered, for example, in the following manner. A moss plant to be cleaned is washed once with water and then gently centrifuged. A series of steps of cleaning a moss plant can conform to an ordinary household washing process: washing → rinsing (cleaning step) → spin-drying (gentle centrifugal step).

Preferably, a gentle centrifugal treatment is terminated when a moss plant is substantially spin-dried. Preferably, the centrifugal treatment employs a rotational speed substantially similar to that of a household spin drier; specifically, approx. 500 rpm to 1500 rpm, and is performed for approx. 3 minutes. However, the present invention is not limited thereto. The thus-cleaned moss plant can be sown on the ground in a uniformly scattered condition by an ordinary drop-through-sieve method. Drop-through-sieve may be performed manually or mechanically, such as by use of a vibrator.

Particularly, when a moss plant is to be sown over a wide area, a mobile apparatus, such as a tractor, provided with a drop-through-sieve function may be run for sowing uniformly and efficiently the moss plant through a sieve throughout a desired area.

A moss plant used in the present invention is not particularly limited.

Examples of an applicable moss plant include Atrichum undulatum (Hedw.) P. Beauv (Namigata-Tachigoke) and the like belonging to Atrichum P. Beauv. (Tachigoke-zoku); Pogonatum inflexum (Lindb.) Lac. (Ko-sugigoke) and the like belonging to Pogonatum P. Beauv (Niwa-sugigoke-zoku); Polytrichastrum formosum (Hedw.) G.L. Smith and the like belonging to Polytrichastrum G.L. Smith (Miyama-sugigoke-zoku); Polytrichum commune Hedw. (Uma-sugigoke) and the like belonging to Polytrichum Hedw. (Sugigoke-zoku); Ceratodon purpureus (Hedw.) Bird. (Yanoueno-akagoke) and the like belonging to Ceratodon Bird. (Yanouenoaka-goke-zoku); Dicranum japonicum Mitt. (Shippogoke), Dicranum nipponense Besch (O-shippogoke), Dicranum scoparium Hedw. (Kamojigoke), Dicranum polysetum Sw. (Nami-shippogoke) and the like belonging to Dicranum Hedw. (Shippogoke-zoku); Leucobryum scabrum Lac. (O-shiragagoke), Leucobryum juniperoideum (Brid.) C. Mull. (Hosoba-okinagoke) and the like belonging to Leucobryum Hampe (Shiragagoke-zoku; Bryum argenteum Hedw. (Gingoke) and the like belonging to Bryum Hedw. (Hariganegoke-zoku); Rhodobryum giganteum (schwaegr.) Par. (O-kasagoke) and the like belonging to Rhodobryum (Schimp.) Hampe (Kasagoke-zoku); Plagiomnium acutum (Lindb.) T. Kop. (Kotsubogoke) and the like belonging to Plagiomnium T. Kop. (Tsuru-chochingoke-zoku); Trachycystis microphylla (Dozy et Molk.) Lindb. (kobano-chochingoke) and the like belonging to Trachycystis Lindb. (Kobano-chochingoke-zoku); Pyrrhobryum dozyanum (Lac.) Manuel (Hinokigoke) and the like belonging to Pyrrhobryum Mitt. (Hinokigoke-zoku); Bartramia pomiformis Hedw. (O-tamagoke) and the like belonging to Bartramia Hedw. (tamagoke-zoku); Climacium dendroides (Hedw.) Web. et Mohr (Furso), Climacium japonicium Lindb. (Koyano-mannengusa) and the like belonging to Climacium Web. et Mohr (Koyano-mannengusa-zoku); Racomitrium ericoides (Web. et Brid) Brid (Hai-sunagoke), Racomitrium japonicium Dozy et Molk. (Ezo-sunagoke), Racomitrium canescens (Hedw.) Brid. ssp. latifolium (Sunagoke), Racomitrium barbuloides Card. (Kobanosunagoke) and the like belonging to Racomitrium Brid. (Shimofurigoke-zoku); Hypnum plumaeforme Wils. (Haigoke) and the like belonging to Hypnum Hedw., nom. cons. (Haigoke-zoku); and Thuidium Kanedae Sak. (Toyama-shinobugoke) and the like belonging to Thuidium Bruch et Schimp. in B.S.G. (Shinobugoke-zoku). However, the present invention is not limited thereto.

These moss plants can be used singly or in combination.

The present invention allows combined use of moss plants of different properties; for example, combined use of a moss plant which prefers shade and a moss plant which prefers sunlight, to thereby cause competition/transition between the moss plants according to a specific environment of a place where a fixed material according to the present invention is laid.

In the present invention, the moss plant may be used in its whole body. Alternatively, it may be used in a chopped form (preferably, in pieces measuring about 0.5-2 mm long). Generally, chopping the plant bodies can enhance the regeneration capability of a moss plant. No particular limitation is imposed on means for chopping a moss plant. For example, a dried moss plant can be ground to a desired condition by use of a grinder capable of grinding an object with a rotating blade or similar means. Growing buds of a moss plant exhibit strong regenerative power. Thus, preferably, the present invention selectively uses growing buds of a moss plant. Growing buds of a moss plant, particularly those of an acrocarpous moss plant such as Rhacomitrium Canescens, can be selectively gathered with ease in the following manner: apical portions (where growing buds are present) of plant bodies of a native moss plant are cut by use of scissors resembling hair clippers or the like (in the case of Rhacomitrium Canescens, growing buds can be selectively gathered by sweeping apical portions of plant bodies with a broom or the like). In the case of a moss plant, even when regeneration buds are removed by picking, buds regenerate quickly. Thus, the same moss plant allows repeated gathering of regeneration buds.

In the present invention, a moss plant in a chopped form described above can be contained in the upper-surface composition or arranged on the present fixed material in a fixed condition.

The production process can include a step of nurturing a moss plant fixedly arranged on the present fixed material so as to regenerate buds, whereby the present fixed material bearing regeneration buds can be handled as a finished product.

Furthermore, the present fixed material allows coloring as needed. Also, for example, colored matter such as lumps of colored clay can be contained in the foundation composition and/or the upper-surface composition so as to provide the present fixed material wherein the colored matter is exposed on the upper surface thereof.

No particular limitation is imposed on the general shape that the present fixed material assumes. For example, the present fixed material can assume the shape of a flat plate (e.g., the planar shape of the present fixed material can be of a standard size such as size A4), the colony shape, a concave-convex shape, or a multiple-hole shape. Such a shape can be freely designed through adjustment of, for example, the general shape of a form.

The thus-produced present fixed material is laid on a flatland, inclined surface, ordinary wall surface, or the like. Time-course growth of a moss plant on the upper surface of the present fixed material improves the environment of the site where the present fixed material is laid. Generally, a moss plant has an excellent feature that, when in a dried condition, it is in a state of apparent death, but is immediately reanimated upon becoming wet through exposure to rainfall. In contrast to grass and other plants which require maintenance such as watering, the present fixed material can improve the environment of the site where the same is laid, without need of such maintenance. In contrast to general plants such as grass, a moss plant can carry out biogenic activities only through photosynthesis, and rhizoids are a mere organ for supporting plant bodies. Thus, nurturing a moss plant does not require a large amount of soil, whereby a unit weight in relation to the laying of the present fixed material can be considerably reduced. When the laid, present fixed material needs to be replaced due to a breakage or the like therein, the laid, present fixed material can be easily removed and replaced with a new one.

The present fixed material absorbs carbon dioxide and liberates oxygen by means of photosynthesis of a moss plant. Furthermore, the present fixed material suppresses the temperature rise of an object covered therewith by means of a heat insulating effect yielded by a moss plant, thereby effectively suppressing the so-called heat island phenomenon. Additionally, a moss plant is a constituent of a biota of a very early stage. Therefore, the establishment of a moss plant contained in the present fixed material sequentially brings about the establishment and inhabitation of other living things, thereby improving the environment of a site where the present fixed material is laid.

The present fixed material can also be used for propagating a moss plant. Specifically, the present fixed material is laid or subjected to like operation so as to nurture a moss plant. As a result, for example, one initial unit of a moss plant can be propagated to two or more units of the moss plant on the present fixed material. Upper portions of plant bodies of the thus-propagated moss plant are trimmed off. The thus-obtained portions of the moss plant can be used for producing the present fixed material and a root-spread, fixed material (trimming a moss plant of the present fixed material is technically easier than trimming a moss plant that is grown in an ordinary manner). The present fixed material which has undergone the trimming of a moss plant can be continuously nurtured so as to regenerate the moss plant. As described above, the present fixed material is also suited for propagating a moss plant.

Conceivably, the present fixed material is laid on, particularly, a concrete surface. No particular limitation is imposed on a method for laying (attaching) the present fixed material. For example, the present fixed material having holes formed on its bottom portion is produced; adhesive (e.g., a silicone adhesive, which has no adverse effect on the growth of a moss plant) is filled into the holes; and the thus-prepared present fixed material is laid under pressure on a required surface to thereby be attached to the surface. Alternatively, the present fixed material is produced such that a root-spread portion of another plant is provided at the bottom surface thereof [e.g., plant seeds are disposed within the present fixed material; the present fixed material is nurtured with its upper surface facing upward; and plant body portions (leaves and stems) are removed so as to leave a desired root-spread portion on the bottom surface of the present fixed material (a root-spread surface to be formed does not need to be like that of a root-spread, fixed material)]. Adhesive is applied to the thus-formed root-spread portion, whereby the present fixed material can be attached to a required surface by means of the adhesive.

Using, as fine soil matter to be contained in the present fixed material, surplus soil which arises in producing a root-spread, fixed material allows the combined production of a root-spread, fixed material and the present fixed material and is preferred. Copying paper, newspaper and the like can be used as a source of fragmented paper to be contained in the present fixed material, whereby the production of the present fixed material can be incorporated into a paper recycling system.

As described in, for example, International Patent Publication WO00/25570, the production of a root-spread, fixed material can alone be applied to the construction of several recycling systems. However, the combination of the production of a root-spread, fixed material and the production of the present fixed material allows the construction of more efficient recycling systems.

The present fixed material *per se* may be caused to undergo root spreading so as to yield a root-spread, fixed material. Specifically, seeds of an ordinary plant (a rice plant, barley, or the like) are disposed in the present fixed material (either in a dried condition or in a wet condition before drying) which is contained in a form and to which root spreading is not applied. The seeds are nurtured to grow roots, whereby a root-spread surface is formed on the lower surface of the present fixed material. Thus is obtained the present fixed material which serves as a desired root-spread, fixed material. The root-spreading process is described in detail in, for example, International Patent Publication WO00/25570.

The process of producing the present fixed material can be applied to the production of an object on which a moss plant appears. Specifically, the foundation composition (on which the upper-surface composition is laid in a fixed condition), which partially constitutes the present fixed material, is laid on an object (assuming a certain shape) in a fixed condition at the stage of the precursory composition, which contains water, and preferably any one of the above-described exposing processes (1) to (3) for exposing a moss plant is carried out, followed by drying.

### BRIEF DESCRIPTION OF THE DRAWINGS

FIG. 1 is a series of views showing a process for producing the present fixed material;
FIG. 2 is a series of views showing modes for laying the present fixed material;
FIG. 3 is a couple of views showing a mode for laying the present fixed material by use of root-spread portions of the material;
FIG. 4 is a series of views showing an example process for producing the present fixed material wherein a convex structure is formed on the upper surface thereof, and the convex structure is formed from an upper-surface composition;
FIG. 5 is a series of views showing an example process for producing the present fixed material wherein a convex structure is formed on the upper surface thereof, and a non-convex structure in relation to the convex structure is formed from the upper-surface composition;
FIG. 6 is a series of views showing an example process for producing the present fixed material wherein a concave structure is formed on the upper surface thereof, and the concave structure is formed from the upper-surface composition;
FIG. 7 is a series of views showing an example process for producing the present fixed material wherein a concave structure is formed on the upper surface thereof, and a non-concave structure in relation to the concave structure is formed from the upper-surface composition;
FIG. 8 is a series of views showing another example process for producing the present fixed material wherein a concave-convex structure is formed on the upper surface thereof;
FIG. 9 is a view showing a mode of the present fixed material wherein a concave-convex structure is formed by use of a moss plant in a mat-like condition in place of the upper-surface composition which contains a moss plant;
FIG. 10 is a series of views showing other modes of the present fixed material wherein a concave-convex structure is formed by use of a moss plant in a mat-like condition in place of the upper-surface composition which contains a moss plant;
FIG. 11 is a series of views showing an embodiment of a process for producing the present fixed material wherein a moss plant is directly arranged on the upper surface thereof without use of the upper-surface composition;
FIG. 12 is a couple of views showing a process for forming groove portions of the grooved, present fixed material;
FIG. 13 is a series of views showing a process for producing the present fixed material wherein a moss plant is arranged in a standing condition; and
FIG. 14 is a series of views showing the production of a three-dimensional object through combination of the present fixed materials in various shapes.

### BEST MODE FOR CARRYING OUT THE INVENTION

Modes for carrying out the present invention will next be described with reference to the drawings.

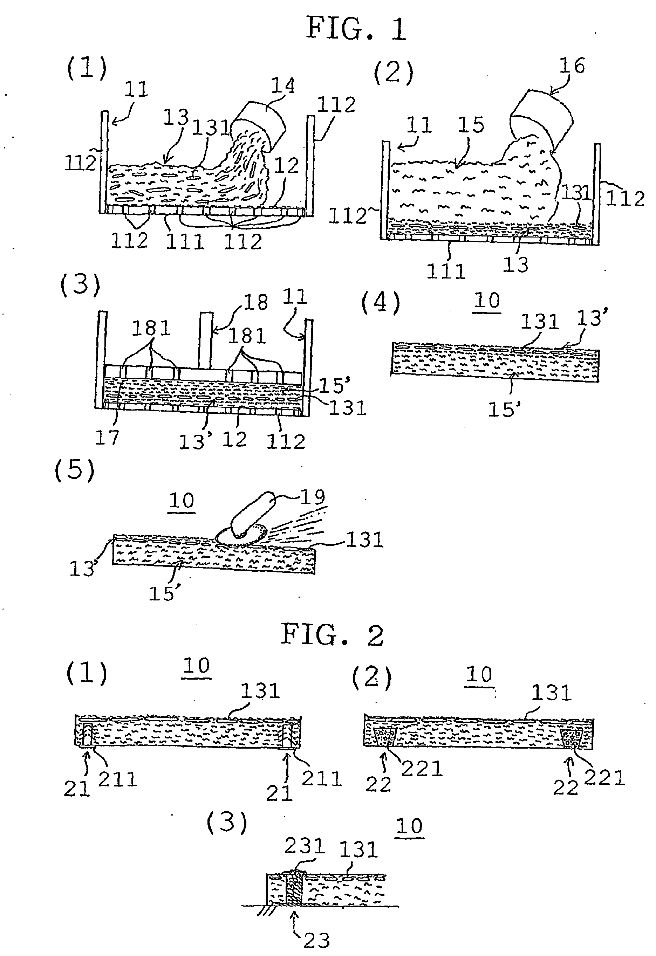

FIG. 1 shows a typical process for producing the present fixed material by use of vertical sectional views. FIG. 1(1) shows a step of pouring a precursory composition 13 [a composition which contains fine soil matter (preferably clay), ground paper or the like, a moss plant 131, and water at the previously mentioned ratios] of an upper-surface composition into a tray-like form 11 from a container 14. The tray-like form 11 includes a bottom plate 111 (the bottom plate 111 has drain holes 112 formed therein and is removable from side plates 113) and a separation mesh member 12 disposed on the bottom plate 111. Next, the precursory composition 13 poured into the form 11 is leveled on the bottom plate 111. A precursory composition 15 [a composition which contains fine soil matter (preferably clay), ground paper or the like, and water at the previously mentioned ratios] of a foundation composition is poured over the leveled precursory composition 13 [FIG. 1(2)]. Next, the poured precursory composition 15 is lightly leveled, and a separation mesh member 17 is disposed on the leveled precursory composition 15. The resultant laminate of the precursory composition 13 of the upper-surface composition and the precursory composition 15 of the foundation composition is pressed from above within the form 11 by use of a press plate 18 which has drain holes 181 formed therein, to thereby be compressed to have a predetermined shape. In this step of pressing, water drains through the holes 112 and 181, and an upper-surface composition 13' and a foundation composition 15' are integrated in layers within the form 11 [FIG. 1(3)]. Next, the bottom plate 111 is removed from the form 11, and the mesh members 12 and 17 are peeled off, thereby yielding the present fixed material 10 in a wet condition [FIG. 1(4)]. As mentioned previously, when the upper-surface composition 12', which forms a top layer of the present fixed material 10, has the content of the moss plant 131 which is two times or more that of other components of the upper-surface composition, the moss plant 131 is exposed. The substrate-like, wet, present fixed material 10 wherein the moss plant 131 is thus exposed is allowed to dry so as to become ready for being laid on site. By contrast, when the content of the moss plant 131 is less than two times that of other components of the upper-surface composition, the moss plant 131 is buried in other components of the upper-surface composition 13. In this case, the present fixed material 10, after being dried, must undergo shaving with a grinder 19 or the like as shown in FIG. 1(5), or exposure treatment (by previously described exposing means (2), not shown) for exposing the moss plant by use of a water flow, so as to expose the moss plant from the surface of the present fixed material 10.

Generally, the present fixed material 10 is fixedly laid on an object surface for laying such that the upper-surface composition 13' from which the moss plant 131 is exposed faces upward, while the foundation composition 15' faces the object surface for laying. Usually, an object surface for laying is a concrete surface, whereas the foundation composition contains fine solid matter. Thus, it is difficult to firmly bond the present fixed material 10 directly to an object surface for laying by means of adhesive or the like. In order to cope with this problem, for example, screwlike metal members 21 each equipped with a retaining plate 211 are stuck into the present fixed material 10 from the bottom surface thereof. The retaining plates 211 of the screwlike metal members 21 are used as bonding plates. Specifically, adhesive is applied to the retaining plates 211, and then the present fixed material 10 is bonded to an object surface for laying via the retaining plates 211 [FIG. 2(1)]. Alternatively, holes 22 (preferably, in order to enhance bonding strength, the holes 22 are formed such that the cross-sectional size thereof increases toward the interior of the present fixed material 10) are provided on the bottom surface of the present fixed material 10, and concrete or adhesive 221 is injected into the holes 22. The fixed body material 10 can be bonded to an object surface for laying by means of the concrete or adhesive [FIG. 2(2)]. The holes of FIG. 2(2) can serve as a through-hole 23, whereby the present fixed material can be bonded to an object surface for laying by means of adhesive 231 or the like which assumes the form of a rivet [FIG. 2(3)].

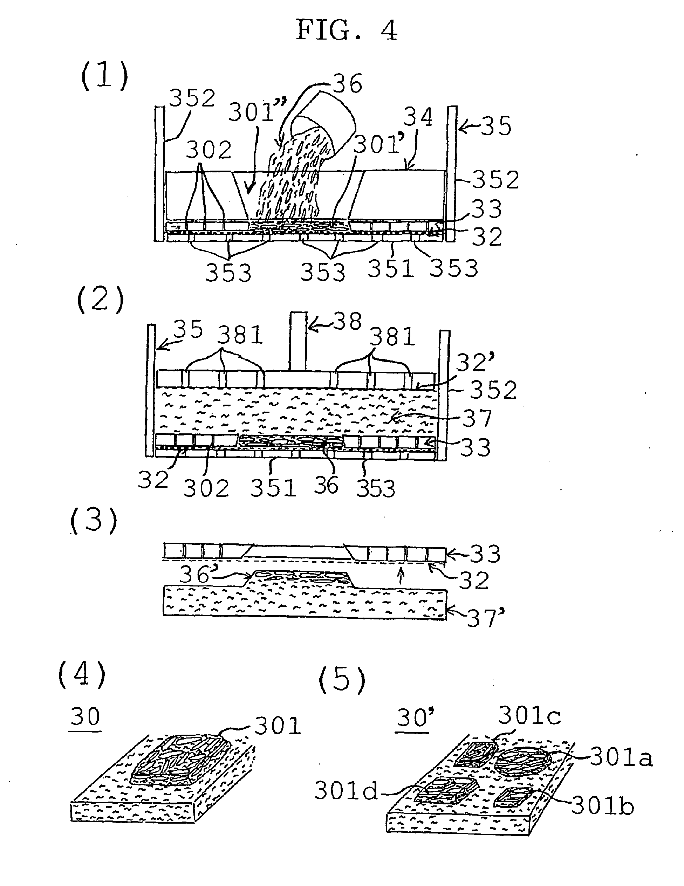

Alternatively, seeds 24 of a plant are disposed on the upper surface of the present fixed material 10 disposed in a tray-like form 25. The seeds 24 of the plant are allowed to root so as to form root-spread portions 241 at a bottom portion of the present fixed material 10 [FIG. 3(1)]. Plant body portions (stems, leaves, and seeds) of the plant are removed. The present fixed material 10 can be bonded to an object surface for laying by means of adhesive 241 or the like applied to the root-spread portions 241.

As a result of the present fixed material 10 being bonded to an object surface for laying, the moss plant 131 is nurtured, thereby improving the environment of an object for laying (fixation of carbon dioxide and liberation of oxygen through photosynthesis, suppression of temperature rise of an object for laying by means of heat insulating effect yielded by the moss plant 131, formation of biota based on the moss plant 131, and the like).

FIG. 4 is a series of views showing an example process for producing the present fixed material wherein a convex structure is formed on the upper surface thereof, and the convex structure is formed from the upper-surface composition.

In FIG. 4(1), a tray-like form 35 is configured such that a bottom plate 351 is removable from side plates 352 and has a number of drain holes 353 formed therein. A separation mesh member 32 is disposed on the upper surface of the bottom plate 351. A template 33 for forming a convex structure 301 of the present fixed material 30 is disposed on the separation mesh member 32. The template 33 has a through-hole 301' formed therein in such a manner as to be fitted to the convex structure 301, and has a number of drain holes 302 formed therein. A thick auxiliary plate 34 adapted to pour a composition and having a composition-pouring through-hole 301'' formed therein is disposed on the template 33 such that the through-hole 301'' is substantially aligned with the through-hole 301'. FIG. 4(1) shows a precursory composition 36 of the upper-surface composition being poured toward the through-hole 301' through the through-hole 301'' of the auxiliary plate 34. Notably, in FIG. 4(1), preferably, to the greatest possible extent, the shape of the upper-end opening of the through-hole 301' is identical to that of the lower-end opening of the through-hole 301'' in order to facilitate the pouring of the precursory composition from the upper end of the through-hole 301''. Further preferably, the area of the upper-end opening of the through-hole 301'' is slightly greater than that of the lower-end opening of the same such that the cross-sectional area of the through-hole 301'' decreases gradually downward, in order to facilitate the pouring of the precursory composition.

In FIG. 4(1), after the precursory composition 36 of the upper-surface composition is poured to fill the through-hole 301', the auxiliary plate 34 is removed. The precursory composition 36 is leveled flush with the upper end of the through-hole 301' of the template 33. The resultant assembly is overlaid with a precursory composition 37 of the foundation composition. Next, a separation mesh member 32' is placed on the precursory composition 37. The resultant laminate of the precursory composition 36 of the upper-surface composition and the precursory composition 37 of the foundation composition is pressed from above within the form 35 by use of a press plate 38 which has drain holes 381 formed therein, to thereby be compressed to have a predetermined shape. In this step of pressing, water drains through the holes 302 and 353, and an upper-surface composition 36' and a foundation composition 37' are integrated in layers within the form 35 [FIG. 4(2)]. Next, the bottom plate 351 is removed from the form 35; the mesh members 32 and 32' are peeled off; and the template 33 is removed, thereby yielding the present fixed material 30 wherein a convex portion 301 of the upper-surface composition is formed on the foundation composition 37' [FIG. 4(3); FIG. 4(4) is a general perspective view]. Notably, for example, the present fixed member 30' of FIG. 4(5) wherein convex structures (301a, 301b, 301c, and 301d) of various shapes and sizes are formed from the upper-surface composition 36' can be produced by the above-described process of production and by use of the template 33 and auxiliary plate 34 which have the through-holes 301' and 301'', respectively, of various shapes and sizes formed therein.

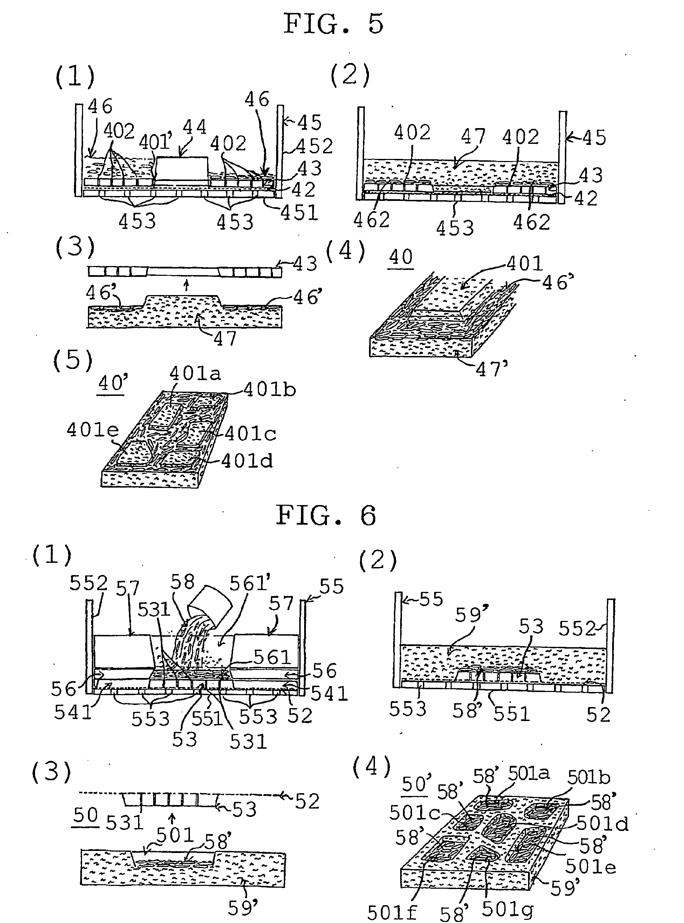

FIG. 5 is a series of views showing an example process for producing the present fixed material wherein a convex structure is formed on the upper surface thereof, and a non-convex structure in relation to the convex structure is formed from the upper-surface composition.

In FIG. 5(1), a tray-like form 45 is configured such that a bottom plate 451 is removable from side plates 452 and has a number of drain holes 453 formed therein. A separation mesh member 42 is disposed on the upper surface of the bottom plate 451. A template 43 for forming a convex structure 401 of the present fixed material 40 is disposed on the separation mesh member 42. The template 43 has a through-hole 401' formed therein in such a manner as to be fitted to the convex structure 401, and has a number of drain holes 402 formed therein. A fitting member 44 is fitted into the through-hole 401' such that a protrusion having a cross-sectional shape substantially identical to that of the through-hole 401' protrudes upward from the template 43. Next, a precursory composition 46 of the upper-surface composition is poured over the template 43 in a region other than the fitting member 44. Apparently surplus water of the precursory composition drains out through the holes 453 and 402. As a result, a precursory composition 462 in a substantially drained condition is disposed on the template 43.

Next, the fitting member 44 is removed. A precursory composition 47 of the foundation composition is poured over the precursory composition 462. In a manner similar to that described above with reference to FIG. 4(2), the resultant laminate of the precursory composition 462 of the upper-surface composition and the precursory composition 47 of the foundation composition is pressed from above within the form 45 by use of a press plate (not shown), to thereby be compressed to have a predetermined shape. In this step of pressing, water drains through the holes 402 and 453, and an upper-surface composition 46' and a foundation composition 47' are integrated in layers within the form 45 [FIG. 5(2)]. Next, the bottom plate 451 is removed from the form 45; the mesh members are peeled off; and the template 43 is removed, thereby yielding the present fixed material 40 wherein a convex portion 401 is formed thereon, and the upper-surface composition 461' is disposed on a non-convex portion in relation to the convex portion 401 [FIG. 5(3); FIG. 5(4) is a general perspective view]. Notably, for example, the present fixed member 40' of FIG. 5(5) wherein convex structures (401a, 401b, 401c, 401d, and 401e) of various shapes and sizes are formed, and the upper-surface composition 37' is disposed on a non-convex portion in relation to the convex structures can be produced by the above-described process of production and by use of the template 43 having the through-holes 401' of various shapes and sizes formed therein and the fitting members 44 of various shapes and sizes.

FIG. 6 is a series of views showing an example process for producing the present fixed material wherein a concave structure is formed on the upper surface thereof, and the concave structure is formed from the upper-surface composition.

In FIG. 6(1), a tray-like form 55 is configured such that a bottom plate 551 is removable from side plates 552 and has a number of drain holes 553 formed therein. A separation mesh member 52 is disposed on the upper surface of the bottom plate 551. A member 53 for forming a concave structure 501 of the present fixed material 50 is bonded onto the separation mesh member 52 (the mesh member 52 and the member 53 may not be bonded together; i.e., the member 53 may merely be placed on the mesh member 52). The member 53 assumes such a shape as to be fitted into the concave structure 501 (the member 53 has a number of drain holes 531 formed therein). Then, a mate member 541 is placed on the mesh member 52 to which the member 53 is bonded, such that the mate member 541 and the member 53 are engaged together flush with each other to thereby form a flat surface. An auxiliary plate 56 adapted to receive a composition and having a through-hole 561- whose cross-sectional shape is substantially identical to that of the upper end of the engaging structure of the mate member 541-formed therein is placed on the flat surface such that the upper end of the engaging structure of the mate member 541 is aligned with the lower end of the through-hole 561. A thick auxiliary plate 57 adapted to pour a composition and having a composition-pouring through-hole 561' formed therein is disposed on the auxiliary plate 56 such that the through-hole 561 and the through-hole 561' are substantially aligned with each other. A precursory composition 58 of the upper-surface composition is poured toward the through-hole 561 through the through-hole 561' of the auxiliary plate 57. Notably, in FIG. 6(1), preferably, to the greatest possible extent, the shape of the upper-end opening of the through-hole 561 is identical to that of the lower-end opening of the through-hole 561' in order to facilitate the pouring of the precursory composition from the upper end of the through-hole 561'. Further preferably, the area of the upper-end opening of the through-hole 561' is slightly greater than that of the lower-end opening of the same such that the cross-sectional area of the through-hole 561' decreases gradually downward, in order to facilitate the pouring of the precursory composition.

In FIG. 6(1), after the precursory composition 58 of the upper-surface composition is poured to fill the through-hole 561, the auxiliary plate 57 is removed. The precursory composition 58 is leveled flush with the upper end of the through-hole 561 of the auxiliary plate 56. Next, the auxiliary plate 56 and the mate member 541 are removed. The resultant assembly is overlaid with a precursory composition 59 of the foundation composition. Then, in a manner similar to that described above with reference to FIG. 4(2), the resultant laminate of the precursory composition 58 of the upper-surface composition and the precursory composition of the foundation composition is pressed within the form 55 by use of a press plate (not shown), to thereby be compressed to have a predetermined shape. In this step of pressing, water drains through the holes 553 and 531, and an upper-surface composition 58' and a foundation composition 59' are integrated in layers within the form 55 [FIG. 6(2)]. Next, the bottom plate 551 is removed from the form 55, and the mesh member is peeled off, thereby yielding the present fixed material 50 wherein the upper-surface composition 58' is present within a concave structure 501 provided on the upper surface thereof [FIG. 6(3)]. Notably, for example, the present fixed member 50' of FIG. 6(4) wherein concave structures (501a, 501b, 501c, 501d, 501e, 501f, and 501g) of various shapes and sizes are formed, and the upper-surface composition 58' is present within the concave portions can be produced by the above-described process of production and by use of the mesh member 52 to which the members 53 of various shapes and sizes are bonded, a mate member 541, and auxiliary plates 56 and 57.

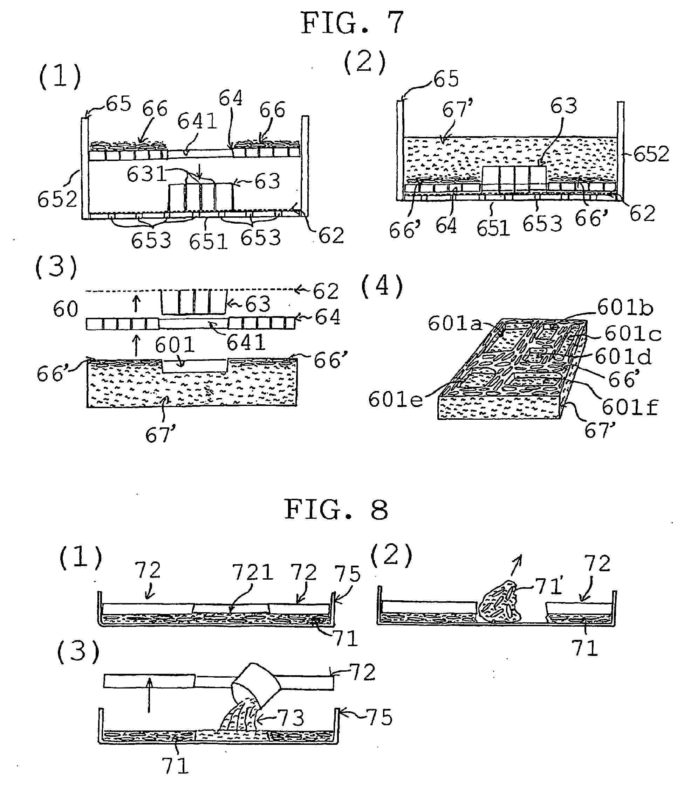

FIG. 7 is a series of views showing an example process for producing the present fixed material wherein a concave structure is formed on the upper surface thereof, and a non-concave structure in relation to the concave structure is formed from the upper-surface composition.

In FIG. 7(1), a tray-like form 65 is configured such that a bottom plate 651 is removable from side plates 652 and has a number of drain holes 653 formed therein. A separation mesh member 62 is disposed on the upper surface of the bottom plate 651. A member 63 for forming a concave structure 601 of the present fixed material 60 is bonded onto the separation mesh member 62 (the mesh member 62 and the member 63 may not be bonded together; i.e., the member 63 may merely be placed on the mesh member 62). The member 63 assumes such a shape as to be fitted into the concave structure 601 (the member 63 has a number of drain holes 631 formed therein). In, for example, a manner shown in FIG. 5(1), there is prepared a template 64 having a through-hole 641-which can be fitted to the member 63-formed therein and on which a precursory composition 66 of the upper-surface composition in a drained condition is placed. The thus-prepared template 64 is placed on a bottom portion of the form 65, while the through-hole 641 of the template 64 is fitted to the member 63.

Next, the resultant assembly is overlaid with a precursory composition of the foundation composition. Then, in a manner similar to that described above with reference to FIG. 4(2), the resultant laminate of the precursory composition 66 of the upper-surface composition and the precursory composition of the foundation composition is pressed from above within the form 65 by use of a press plate (not shown), to thereby be compressed to have a predetermined shape. In this step of pressing, water drains through the holes 653 and 631, and an upper-surface composition 66' and a foundation composition 67' are integrated in layers within the form 65 [FIG. 7(2)].

Next, the bottom plate 651 is removed from the form 65, the mesh member is peeled off, and the template 64 is removed, thereby yielding the present fixed material 60 wherein the upper-surface composition 66' is present within a non-concave structure provided on the upper surface thereof [FIG. 7(3)]. Notably, for example, the present fixed member 60' of FIG. 7(4) wherein concave structures (601a, 601b, 601c, 601d, 601e, and 601f) of various shapes and sizes are formed, and the upper-surface composition 66' is present within a non-concave portion can be produced by the above-described process of production and by use of the mesh member 62 to which the members 63 of various shapes and sizes are bonded, as well as the relevant template 64.

FIGS. 4 to 7 show a preferred embodiment of a process for producing the present fixed material wherein a concave-convex structure is provided on the upper surface thereof in various modes. For example, the present composition which is embodied in a mode similar to that of the present composition 40 can be produced by the process shown in FIG. 8. Specifically, an upper-surface composition 71 in a wet condition is placed on the bottom surface of a tray-like form 75. A template 72 having a through-hole 721 formed therein is placed on the upper-surface composition 71 [FIG. 8(1)]. An upper-surface composition 71' in a wet condition appearing through the through-hole 721 is removed [FIG. 8(2)], and then the resultant recess is filled with a foundation composition 73 in a wet condition [FIG. 8(2)]. This process involves the removal of the upper-surface composition 71 for each through-hole and tends to encounter difficulty in efficiently finish the removal within a short period of time.

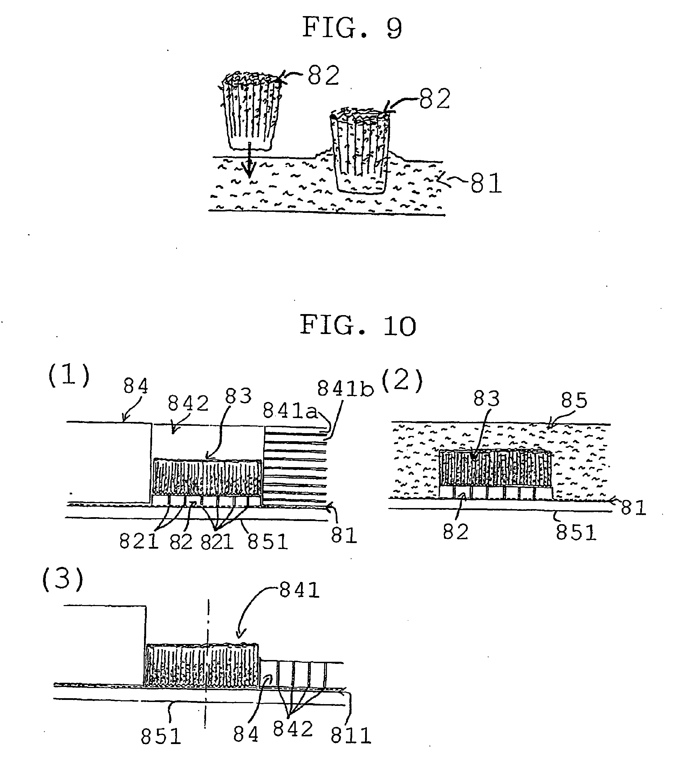

The present fixed material can use a moss plant in a mat-like condition in place of the upper-surface composition which contains a moss plant. FIG. 9 shows the simplest mode of the present fixed material which employs a moss plant in a mat-like condition. As shown in FIG. 9, a moss plant is embedded in solid units 82 in a foundation composition 81 in the form of a substrate. The thus-prepared assembly is solidified, thereby yielding the present fixed material. Notably, the solid unit 82 of a moss plant is prepared in the following manner: a block of a moss plant (Rhacomitrium Canescens or the like is preferred) wherein plant bodies of the moss plant are brought in contact with each other is solidified (example of solidifying means: a bottom portion of a block of a moss plant is solidified by use of the present composition in a wet condition). Through adjustment of the depth of embedding the solid unit 82 of a moss plant in the foundation composition 81, the present fixed material can be embodied such that the moss plant protrudes and serves as a convex portion of the upper surface thereof or such that the moss plant is sunk and serves as a concave portion of the upper surface thereof (as a matter of course, the present fixed material can be embodied such that the moss plant is embedded flush with the foundation composition).

Specifically, as shown in FIG. 10(1), a mesh member 81 on which a member 82 having drain holes 821 formed therein is bonded is placed on a bottom portion 851 [having a number of drain holes (not shown) formed therein] of a tray-like form. An auxiliary plate 84 having a through-hole 842 formed therein [this auxiliary plate can be formed such that a plurality of thin plates (841a, 841b, ...) are stacked (this also applies to other auxiliary plates)] is disposed such that the through-hole 842 is aligned with the member 82. The through-hole 842 assumes such a shape as to receive a colonial moss plant 83. Next, the moss plant 83 is fitted into the through-hole 842, and the resultant assembly is overlaid with a precursory composition of the foundation composition. The resultant laminate within the form is compressed by use of a press plate (not shown) and in a manner similar to that described previously with reference to FIG. 4(2), thereby yielding the present fixed material wherein the colonial moss plant 83 serves as a concave portion of the upper surface thereof. As shown on the left-hand half of FIG. 10(2), when a mesh member 811 to which the member 82 is not bonded is used in place of the above-mentioned mesh member 81, the present fixed material is formed such that a moss plant is embedded in a foundation composition flush with each other at the upper surface thereof. Also, a process as partially shown on the right-hand half of FIG. 10(2) can be employed. Specifically, a template 84 having a through hole 841 and a number of drain holes 842 formed therein is placed on a mesh member 811. The moss plant 83 is fitted into the through-hole 841, and the resultant assembly is overlaid with a precursory composition of the foundation composition. The resultant laminate within the form is compressed by use of a press plate (not shown) and in a manner similar to that described previously with reference to FIG. 4(2), thereby yielding the present fixed material wherein the colonial moss plant 83 serves as a convex portion of the upper surface thereof.

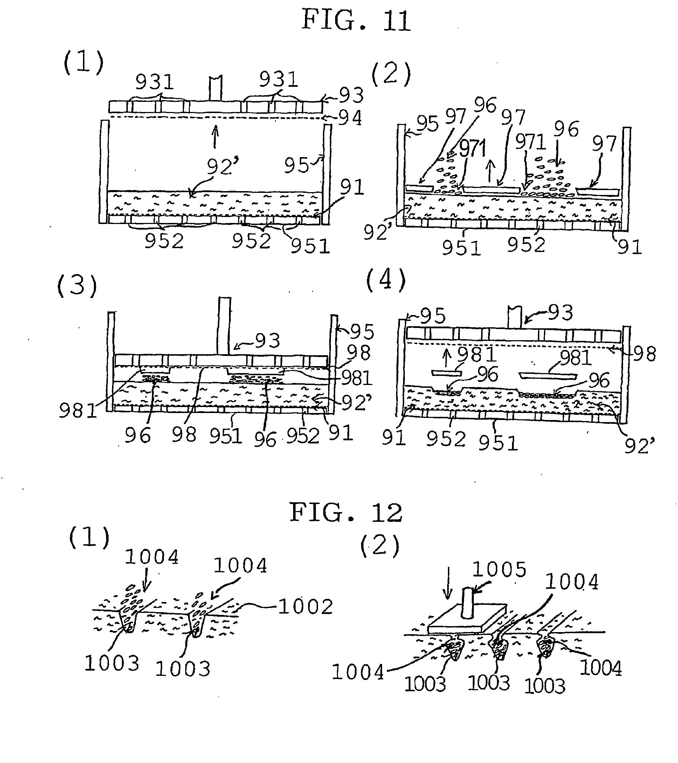

FIG. 11 is a series of views showing an embodiment of a process for producing the present fixed material wherein a moss plant is directly arranged on the upper surface thereof without use of the upper-surface composition.

First, as shown in FIG. 11(1), a mesh member 91 is placed on a bottom portion 951 [having a number of drain holes 952 formed therein] of a tray-like form 95. A precursory composition of the foundation composition is laid on the mesh member 91. The precursory composition within the form is compressed by use of a press plate 93 (having a number of drain holes 931 formed therein and preferably used in combination with a mesh member 94 disposed underneath the bottom surface thereof) and in a manner similar to that described previously with reference to FIG. 4(2), thereby yielding a wet foundation composition 92 formed into the shape of the form 95. Next, as shown in FIG. 11(2), a plate member 97 having through-holes 971 formed therein is placed on the wet foundation composition 92. Each of the through-holes 971 assumes a shape which an arranged moss plant 96 is to assume. The moss plant 96 is spread in the through-holes 971, whereby the moss plant can be arranged at desired positions on the foundation composition 92. Next, as shown in FIG. 11(3), by use of a mesh member 98 which has press protrusions 981 corresponding to the through-holes 971, the thus-arranged moss plant 96 is pressed into the foundation composition 92 (e.g., the above-mentioned press plate 93 can be used for pressing), whereby the moss plant 96 can be pressed in the foundation composition 92 in a fixed condition [FIG. 11(4)]. The thus-prepared formed material is allowed to dry, thereby yielding the present fixed material wherein a desired moss plant is directly arranged on the upper surface thereof.

FIG. 12 shows a process for forming groove portions of the grooved, present fixed material. As shown in FIG. 12(1), V-shaped grooves 1003 are formed on the upper surface of a formed wet foundation composition 1002, and a moss plant or an upper-surface composition 1004 is filled into the V-shaped grooves 1003. Next, as shown in FIG. 12(2), the V-shaped grooves 1003 are pressed from above by use of a press plate 1005, whereby upper portions of the V-shaped shaped grooves are narrowed to thereby fix the filling moss plant or upper-surface composition 1004 within grooves 1003' whose upper portions are narrowed.

The V-shaped grooves which are thus formed on a surface of the present fixed material in such a manner as to be filled with a moss plant or the upper-surface composition 1004 provide means for diversifying the surface pattern of the present fixed material.

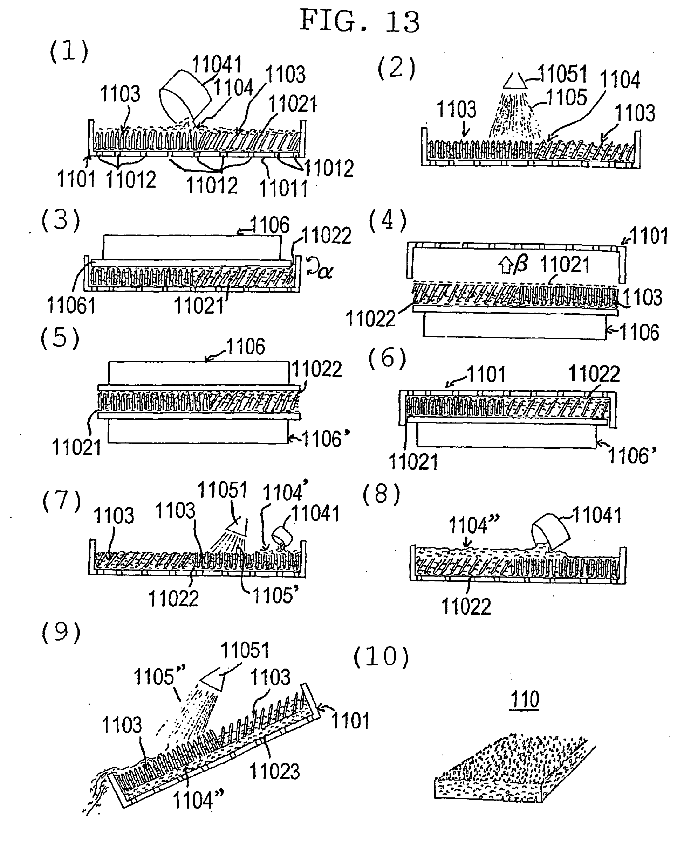

FIG. 13 is a series of vertical sectional views showing an example process for producing the present fixed material 110 wherein a moss plant is arranged in a standing condition.

FIG. 13(1) shows a stage in which a separation mesh member 11021 is disposed on a bottom plate 11011 of a tray-like form 1101 (the bottom plate 11011 has drain holes 11012 formed therein); a moss plant 1103 is arranged in a standing condition (apical portions of the moss plant 1103 face upward) on the separation mesh member 11021; and a precursory composition 1104 of the foundation composition is poured over the moss plant 1103 from a container 11041 in an overlying condition (the left-hand moss plant 1103 is arranged in a substantially vertically standing condition, and the right-hand moss plant 1103 is arranged in an obliquely standing condition). Next, the overlying precursory composition 1104 is caused to move toward a lower portion of the moss plant 1103 through utilization of water pressure of a water flow 1105 discharged from a shower nozzle 11051 [FIG. 13(2)]. After completion of step (2), a separation mesh member 11022 is placed on the moss plant 1103; a first press plate 1106-which preferably has a press plane 11061 capable of being fitted into the form 1101-is pressed on the separation mesh member 11022; the resultant assembly is inverted (arrow α)[FIG. 13(3)]. Then, the form 1101 is removed (arrow β)[FIG. 13(4)].

Next, a second press plate 1106-which preferably is substantially identical to the first press plate 1106-is placed in such a manner as to replace the form 1101, and then the resultant assembly is again inverted [FIG. 13(5)]. Next, the first press plate 1106 is removed, and subsequently the resultant assembly is covered with the form 1101 [FIG. 13(6)]. Again, the resultant assembly is inverted, so that an apical portion of the moss plant 1103 faces downward; the second press plate 1106' is removed; and the mesh member 11021 is peeled off [FIG. 13(7)]. Preferably, a precursory composition 1104' of the foundation composition is poured thin over the moss plant 1103 from the container 11041 in an overlying condition and is caused to slightly move toward the apical portion of the moss plant 1103 through utilization of water pressure of a water flow 1105' discharged from the shower nozzle 11051 while the surface of the precursory composition 1104' is being leveled. Next, a precursory composition 1104'' of the foundation composition is poured thick over the moss plant 1103 from the container 11041 [FIG. 13(8)] in an overlying condition.

Next, the resultant assembly undergoes the above-described steps (3)-(6) again so as to assume the condition of FIG. 13(9). Specifically, a separation mesh member 11023 is placed on the overlying precursory composition 1104'' of the foundation composition, and a third press plate (not shown) is pressed on the separation mesh member 11023. Subsequently, the resultant assembly is inverted, and the form 1101 is removed. A fourth press plate (not shown) is placed on the apical-portion side of the moss plant 1103, and the resultant assembly is inverted. The third press plate is removed, and then the resultant assembly is again covered with the form 1101. The resultant assembly is inverted, and the fourth press plate and the mesh member 11022 are removed. Preferably, surplus precursory composition of the foundation composition adhering to an apical portion of the moss plant 1103 is washed off through utilization of water pressure of a water flow 1105'' discharged from the shower nozzle 11051 [FIG. 13(9)]. Next, by use of a fifth press plate (not shown), the formed material is pressed from the apical-portion side of the moss plant 1103, preferably via a separation mesh member. Subsequently, the press plate, mesh member, and form are removed. The resultant material is allowed to dry.

By means of following the above-described steps, the present fixed material 110 wherein a near-apical portion of the moss plant 1103 is exposed at the surface of a substrate can be produced.

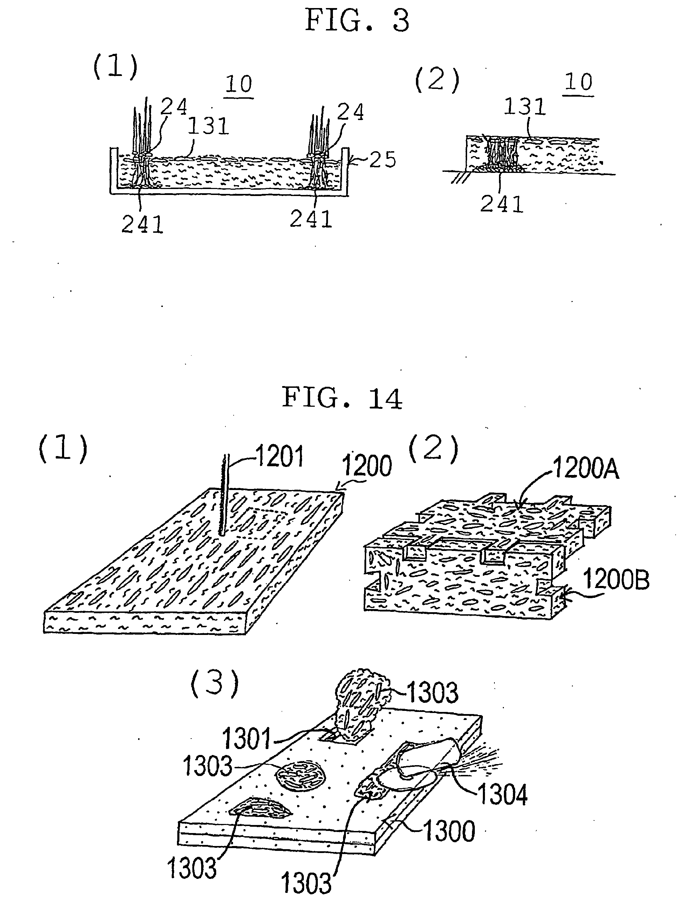

The shape of the present fixed material can be easily processed. Specifically, as shown in FIG. 14(1), the present fixed material 1200 (at least the upper surface thereof is of the upper-surface composition) in the form of a substrate can be cut into various shapes by a simple cutting method, such as cutting with a fret saw 1201 [FIG. 14(1)]. Alternatively, by use of forms of various shapes, various shapes can be imparted to the present fixed material 1200. For example, the present fixed materials 1200A and 1200B in mating shapes are mated together, thereby yielding a three-dimensional object. For example, when water is sprayed on the assembly of the present fixed materials 1200A and 1200B shown in FIG. 14(2), both of the present fixed materials swell. The resultant swollen object is allowed to dry, thereby fixing the object in the three-dimensional shape. Also, as shown in FIG. 14(3), an upper-surface composition 1303 is filled into through-holes or recesses 1301 formed in a platelike member 1300, followed by leveling and drying, whereby a board 1300 wherein a moss plant is incorporated can be produced. When the leveling step is carried out by use of a grinder 1304 or a water flow (not shown) discharged from a shower nozzle, a moss plant contained in the upper-surface composition 1303 can be exposed at the upper surface.

### EXAMPLES

The present invention will next be described by way of example. The term "mass" as used herein refers to dry mass unless otherwise specified. The term "content" refers to an amount in % by mass contained in 100% by mass object unless otherwise specified.

### [Example 1]

Ground newspaper (180 g) and fine soil matter (500 g) [(1) culture soil (400 g) obtained by reducing, with a mixer, granular culture soil dedicated to raising paddy seedling to a particle size substantially similar to that of commercially available nongranular culture soil and (2) clay (100 g)] were placed in water (15 L). The resultant mixture was kneaded, thereby yielding a basic composition (15 L).

A moss plant (200 g) [Rhacomitrium Canescens : Hypnum plumaeforme = 7 : 3 (mass ratio)] and the above-obtained basic composition (three L) were mixed. To the resultant mixture, water was mixedly added until the total volume of mixture was 15 L, thereby yielding a precursory composition of the upper-surface composition.

Three L of the precursory composition of the upper-surface composition was placed in a tray-like pallet whose bottom surface measured 300 mm x 600 mm (the bottom surface had small holes formed therein) and was overlaid with a first mesh member. The placed precursory composition was leveled thin and then overlaid with a second mesh member. The precursory composition was lightly pressed from above via the second mesh member by use of a press plate, whereby the precursory composition was formed into the form of a substrate while water was squeezed therefrom. Next, the press plate and the second mesh member were removed. The upper surface of the substrate was brought in contact with a water flow discharged from a shower nozzle connected to a domestic water supply line [a faucet located on the third floor and connected to a domestic water supply line in an ordinary water supply condition in Tokyo, Japan (this also applies to the description below)], whereby the composition was removed from the surface of the substrate so as to expose the moss plant.

The substrate was drained and allowed to dry. Subsequently, the dried substrate was removed from the pallet and lightly pressed, thereby yielding the present fixed material wherein the moss plant was exposed.

By way of comparison, a basic composition was prepared by use of fine soil matter which was solely composed of culture soil. Subsequently, the present fixed material was produced from the basic composition in a manner similar to that described above. As compared with the thus-obtained present fixed material, the above-produced present fixed material which contained clay exhibited resilience and excellent feel of a material.

To the basic composition, paddy roots (paddy seeds were placed in soil which was placed on a pallet having small holes formed therein, and allowed to root; and when the roots grew to about 10 cm, the roots were cut off along the bottom portion of the pallet and used within one hour) were added in an amount of 50 g (wet mass). By use of the resultant basic composition, the above-described steps were carried out. As a result, at the final drying step, the roots within the fixed material grew by themselves (some roots were exposed to the exterior of the fixed material). The thus-produced present fixed material exhibited higher tensile strength and bending strength as compared with the present fixed material which did not contain roots.

### [Example 2]

The basic composition used in Example 1 was also used in Example 2.

A moss plant (200 g) [Rhacomitrium Canescens : Pedinophyllum Lindb = 7:3 (mass ratio)] and the above-obtained basic composition (1 L) were mixed. To the resultant mixture, water was mixedly added until the total volume of mixture was 15 L, thereby yielding a precursory composition of the upper-surface composition.

One L of the precursory composition of the upper-surface composition was placed in a tray-like pallet whose bottom surface measured 300 mm x 600 mm (the bottom surface had small holes formed therein) and was overlaid with a first mesh member. The placed precursory composition was leveled thin.

The above-mentioned basic composition was diluted 3.75 times with water. The thus-diluted basic composition was poured over the precursory composition of the upper-surface composition on the pallet in a thinly overlying condition.

Ground paper (100 g) was placed in the above-mentioned basic composition (4 L). The resultant mixture was kneaded. To the kneaded mixture, perlite (2 L in volume) and peat moss (0.3 L in volume) were added, followed by kneading. To the resultant mixture, water was added until the total volume of mixture was 15 L, followed by mixing. Thus was obtained a precursory composition of the foundation composition.

The thus-obtained precursory composition (5L) of the foundation composition was poured over the above-mentioned overlying basic composition in an overlying condition. The resultant laminate was overlaid with a second mesh member and then compressed from above by use of a press plate, to thereby be formed.

After forming, the press plate and the form were removed. The thus-formed material was allowed to dry, thereby yielding the present fixed material wherein a moss plant was exposed at the upper surface thereof.

### [Example 3]

Colonially grown Rhacomitrium Canescens was placed in a tray-like pallet whose bottom surface measured 300 mm x 600 mm (the bottom surface had small holes formed therein) and was overlaid with a first mesh member, in a standing condition with apical portions thereof facing upward and in such a manner as to cover the entire bottom surface. A composition which was obtained by diluting the basic composition used in Example 1 3.75 times with water was poured once or twice over the moss plant such that the moss plant is evenly covered therewith. The resultant laminate was exposed to a water flow discharged from a shower nozzle connected to a domestic water supply line such that water pressure of the water flow caused the basic composition to move downward toward a lower portion of the moss plant. Subsequently, a second mesh member was placed on an apical portion of the moss plant. By use of a press plate, the moss plant and the basic composition were pressed into the pallet.

Next, the press plate, pallet, and mesh members were removed. The thus-obtained laminate was placed in the same pallet whose bottom was overlaid with a mesh member, such that an apical portion of the moss plant rested on the bottom of the pallet. Then, a composition (1 L) which was obtained by diluting the basic composition three times with water was poured over the bottom surface of the moss plant in an overlying condition. The resultant laminate was brought into contact with the above-mentioned water flow discharged from the shower nozzle so as to level the surface thereof. Over the resultant laminate, the above-mentioned precursory composition of the foundation composition (4 L) was poured in an overlying condition. By use of a press plate, the resultant laminate was pressed via a mesh member into the pallet to thereby be formed into the form of a substrate.

After forming, the press plate, mesh members, and pallet were removed from the shaped substrate. The substrate was inverted. Surplus composition adhering to an apical portion of the moss plant was washed off by means of the above-mentioned water flow discharged from the shower nozzle. Subsequently, the substrate was again compressed by use of a press plate and then allowed to dry, thereby yielding the present fixed material wherein an apical portion of the moss plant was exposed.

### INDUSTRIAL APPLICABILITY

The present invention provides a material returnable to nature through utilization of features of a moss plant.

## Claims

1. A fixed moss plant material comprising a composition which contains ground paper and/or a paper precursor, and fine soil matter and a composition which contains ground paper and/or a paper precursor, fine soil matter, and a moss plant, wherein said last mentioned composition is fixedly laid atop an upper surface of said first mentioned composition.

2. A fixed moss plant material according to claim 1, wherein the composition which contains ground paper and/or a paper precursor, and fine soil matter is a composition which contains ground paper and/or a paper precursor, and fine soil matter, but is free from a binding strength modifier.

3. A fixed moss plant material according to claim 1 or 2, wherein the fine soil matter contains clay.

4. A fixed moss plant material according to any one of claims 1 to 3, which further contains plant roots.

5. A fixed moss plant material according to any one of claims 1 to 4, which is configured such that a concave-convex structure is provided on an upper surface thereof and such that a concave structure and/or a convex structure is formed from a composition which contains ground paper and/or a paper precursor, fine soil matter, and a moss plant.

6. A fixed moss plant material according to any one of claims 1 to 5, wherein the composition which contains ground paper and/or a paper precursor, and fine soil matter is a composition which contains ground paper and/or a paper precursor, and fine soil matter, but is free from a binding strength modifier; and the composition which contains ground paper and/or a paper precursor, fine soil matter, and a moss plant is a composition which contains ground paper and/or a paper precursor, fine soil matter, and a moss plant, but is free from a binding strength modifier.

7. A fixed moss plant material according to any one of claims 1 to 6, wherein the moss plant contained in the composition is exposed onto an outer surface of the fixed moss plant material.

8. A fixed moss plant material according to any one of claims 1 to 7, wherein near-apical portions of colonially arranged moss plant bodies of the moss plant is exposed onto an outer surface of the fixed moss plant material.

9. A fixed moss plant material comprising a composition which contains ground paper and/or a paper precursor, and fine soil matter; a groove structure provided on an upper surface of the composition; and a moss plant or a composition which contains ground paper and/or a paper precursor, fine soil matter, and a moss plant; wherein the groove structure is fixedly filled with the moss plant or the composition which contains ground paper and/or a paper precursor.

10. A fixed moss plant material comprising a composition which contains ground paper and/or a paper precursor, and fine soil matter; a concave structure provided on an upper surface of the composition; and a moss plant placed on a bottom portion of the concave structure.

11. A fixed moss plant material according to claim 9 or 10, wherein the composition which contains ground paper and/or a paper precursor, and fine soil matter is a composition which contains ground paper and/or a paper precursor, and fine soil matter, but is free from a binding strength modifier.

12. A fixed moss plant material according to any one of claims 9 to 11, wherein the fine soil matter contains clay.
